(19) **Europäisches Patentamt European Patent Office Office européen des brevets**

(11) **EP 0 911 077 B1**

(12) **FASCICULE DE BREVET EUROPEEN**

(45) Date de publication et mention
de la délivrance du brevet:
**26.09.2007 Bulletin 2007/39**

(51) Int Cl.:
***B01J 29/16*** *(2006.01)* ***C10G 47/20*** *(2006.01)*

(21) Numéro de dépôt: **98402595.7**

(22) Date de dépôt: **19.10.1998**

(54) **Procédé d'hydrocraquage de coupes hydrocarbonées**

Verfahren zum Hydrokracken von Kohlenwasserstoffen enthaltenden Fraktionen

Process for hydrocracking of hydrocarbon fractions

(84) Etats contractants désignés:
**DE ES FI NL**

(30) Priorité: **20.10.1997 FR 9713128**

(43) Date de publication de la demande:
**28.04.1999 Bulletin 1999/17**

(73) Titulaire: **Institut Français du Pétrole
92500 Rueil Malmaison (FR)**

(72) Inventeurs:
• **George-Marchal, Nathalie
69230 Saint Genis Laval (FR)**
• **Mignard, Samuel
78400 Chatou (FR)**
• **Kasztelan, Slavik
92500 Rueil Malmaison (FR)**

(56) Documents cités:
**EP-A- 0 310 165 US-A- 4 326 947
US-A- 5 286 692 US-A- 5 342 507**

• **PATENT ABSTRACTS OF JAPAN vol. 018, no. 410 (C-1232), 2 août 1994 & JP 06 121931 A (SEKIYU SANGYO KASSEIKA CENTER;OTHERS: 01), 6 mai 1994**

Remarques:
Le dossier contient des informations techniques présentées postérieurement au dépôt de la demande et ne figurant pas dans le présent fascicule.

**EP 0 911 077 B1**

## Description

La présente invention concerne un procédé d'hydrocraquage de charges hydrocarbonées, ledit procédé utilisant un catalyseur comprenant au moins un métal du groupe VIB (groupe 6 selon la nouvelle notation de la classification périodique des éléments : Handbook of Chemistry and Physics, 76ième édition, 1995-1996), de préférence le molybdène et le tungstène, et éventuellement au moins un métal du groupe VIII (groupes 8, 9 et 10) de ladite classification, de préférence le cobalt, le nickel et le fer, associés à un support comprenant une matrice alumine poreuse amorphe ou mal cristallisée et une zéolithe Y non désaluminée de paramètre cristallin supérieur à 2,438 nm. La matrice alumine du catalyseur renfermant du phosphore et éventuellement au moins un élément du groupe VIIA (groupe 17 des halogènes) et notamment le fluor.

La présente invention concerne plus particulièrement l'hydrocraquage de charges hydrocarbonées telles que les coupes pétrolières et les coupes issues du charbon contenant du soufre et de l'azote sous la forme de composés organiques, les dites charges contenant éventuellement des métaux et/ou de l'oxygène.

L'hydrocraquage conventionnel de coupes pétrolières est un procédé très important du raffinage qui permet de produire, à partir de charges hydrocarbonées lourdes excédentaires des fractions plus légères telles que essences, carburéacteurs et gazoles légers que recherche le raffineur pour adapter sa production à la structure de la demande. Par rapport au craquage catalytique, l'intérêt de hydrocraquage catalytique est de fournir des distillats moyens, carburéacteurs et gazoles, de très bonne qualité.

Les catalyseurs utilisés en hydrocraquage conventionnel sont tous du type bifonctionnels associant une fonction acide à une fonction hydrogénante. La fonction acide est apportée par des supports de grandes surfaces (150 à 800 m$^2$.g$^{-1}$ généralement) présentant une acidité superficielle, telles que les alumines halogénées (chlorées ou fluorées notamment), les combinaisons d'oxydes de bore et d'aluminium, les silices-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que chrome, molybdène et tungstène et au moins un métal du groupe VIII de préférence non noble.

L'équilibre entre la fonction acide et la fonction hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse volumique d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs très actifs mais présentant une mauvaise sélectivité en distillats moyens. Par ailleurs, une fonction acide faible est moins sensible à la désactivation, en particulier par les composés azotés, qu'une fonction acide forte. Le problème qui se pose est donc de choisir judicieusement chacune des fonctions afin d'ajuster le couple activité/sélectivité du catalyseur.

Les supports d'acidité faible sont constitués généralement d'oxydes amorphes ou mal cristallisés. Dans les supports d'acidité faible, on trouve la famille des silice-alumines amorphes. Certains catalyseurs du marché de l'hydrocraquage sont constitués de silice-alumine associée à une association de sulfures des métaux des groupes VIB et VIII. Ces catalyseurs permettent de traiter des charges ayant des teneurs en poisons hétéroatomiques, soufre et azote, élevées. Ces catalyseurs ont une très bonne sélectivité en distillats moyens, ils sont très résistant à de forte teneur en azote et les produits formés sont de bonne qualité. L'inconvénient de ces systèmes catalytiques à base de support amorphe est leur faible activité.

Les supports ayant une acidité forte contiennent généralement une zéolithe désaluminée, par exemple de type Y désaluminée ou USY (Ultra Stable Y zeolite), associée à un liant, par exemple l'alumine. Certains catalyseurs du marché de l'hydrocraquage sont constitués de zéolithe Y désaluminée et d'alumine associée, soit à un métal du groupe VIII soit, à une association de sulfures des métaux des groupes VIB et VIII. Ces catalyseurs sont de préférence employés pour traiter des charges dont les teneurs en poisons hétéroatomiques, soufre et azote, sont inférieure à 0,01 % en poids. Ces systèmes sont très actifs et les produits formés sont de bonne qualité. L'inconvénient de ces systèmes catalytiques à base de support zéolithique est une sélectivité en distillats moyens un peu moins bonne que les catalyseurs à base de support amorphe et une très grande sensibilité à la teneur en azote. Ces catalyseurs ne peuvent supporter que des teneurs en azote faible dans la charge, en général moins de 100 ppm en poids.

Le brevet japonais JP 121931 décrit un catalyseur d'hydroraffinage comportant un support comportant entre 1 et 8 % d'une zéolithe ayant un paramètre de maille de 24,35 à 24,40 Angstrom et entre 92 et 99 % d'alumine.

Le brevet américain US 4,326,947 décrit un catalyseur comportant une zéolithe Y silice-alumine ultra stable ayant une unité de cellule inférieure à 24,5 Angstrom, un fluorophosphate alumine-aluminium et une composante d'hydrogénation et dont le support présente 65 % du volume poreux constitué par des macropores ayant un diamètre supérieur à 1000 Angstrom.

Le brevet américain US 5,342,507 décrit un procédé d'hydrocraquage doux utilisant un catalyseur comportant

2

une zéolithe Y désaluminée présentant des macropores ayant un diamètre supérieur à 250 Angstrom qui constitue entre 15 et 45 % du volume poreux total (colonne 3, lignes 19-30).

La demanderesse à découvert que pour obtenir un catalyseur d'hydrocraquage ayant un bon niveau d'activité et une bonne stabilité sur des charges à forte teneur en azote, il est avantageux d'associer une matrice oxyde amorphe acide de type alumine dopée par le phosphore et éventuellement au moins un élément du groupe VIIA et notamment le fluor à une zéolithe Y non désaluminée globalement très acide.

Par zéolithe non désaluminée globalement on entend une zéolithe Y de structure faujasite (Zeolite Molecular Sieves Structure, Chemistry and Uses, D.W. BRECK, J. WILLEY and Sons 1973). Le paramètre cristallin de cette zéolithe peut avoir diminué par extraction des aluminiums de la structure ou charpente lors de la préparation mais le rapport $SiO_2/Al_2O_3$ global n'a pas changé car les aluminiums n'ont pas été extraits chimiquement. Une telle zéolithe non désaluminée globalement a donc une composition en silicium et aluminium exprimée par le rapport $SiO_2/Al_2O_3$ global équivalent à la zéolithe Y non désaluminée de départ. Cette zéolithe Y non désaluminée globalement peut être sous la forme hydrogène soit être au moins partiellement échangée avec des cations métalliques, par exemple à l'aide de cations des métaux alcalino-terreux et/ou des cations de métaux de terres rares de numéro atomique 57 à 71 inclus. On préférera une zéolithe dépourvue de terres rares et d'alcalino-terreux, de même pour le catalyseur.

La zéolithe globalement non désaluminée peut être obtenue par tout traitement qui n'extrait pas les aluminium de l'échantillon, tel que par exemple le traitement à la vapeur d'eau, le traitement par $SiCl_4$...

Le catalyseur mis en oeuvre dans la présente invention renferme généralement en % poids par rapport à la masse totale du catalyseur au moins un métal choisi dans les groupes suivants et avec les teneurs suivantes :

- 1 à 40%, de préférence de 3 à 45% et de manière encore plus préférée de 5 à 30% d'au moins un métal du groupe VIB,

et/ou,

- 0,1 à 30%, de préférence de 0,1 à 25% et de manière encore plus préférée de 0,1 à 20% d'au moins un métal du groupe VIII,

le catalyseur renfermant en outre :

- 1 à 99%, de préférence de 10 à 98% et de manière encore plus préférée de 15 à 95% d'au moins une matrice alumine amorphe ou mal cristallisée,
- 0,1 à 80%, ou encore de 0,1 à 60% et de préférence de 0,1-30 %, voire 0,1-20 % et même 0,1-12 %, d'au moins d'une zéolithe Y non désaluminée globalement de paramètre cristallin supérieur à 2,438 nm, un rapport molaire $SiO_2/Al_2O_3$ global inférieur à 8, un rapport molaire $SiO_2/Al_2O_3$ de charpente calculé d'après la corrélation dite de Fichtnes-Schmittler (dans Cryst. Res. Tech. 1984, 19, K1) inférieur à 21 et supérieur au $SiO_2/Al_2O_3$ global.
- 0,1 à 20%, de préférence de 0,1 à 15% et de manière encore plus préférée de 0,1 à 10% de phosphore,

et éventuellement,

- 0 à 20%, de préférence de 0,1 à 15% et de manière encore plus préférée de 0,1 à 10% d'au moins un élément choisi dans le groupe VIIA, de préférence le fluor.

Les catalyseurs mis en oeuvre dans la présente invention sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) supérieure à 140 $m^2/g$, un volume poreux total (VPT) mesuré par porosimétrie au mercure compris entre 0,2 et 1,5 $cm^3/g$ et une distribution en taille de pores pouvant être monomodale, bimodale ou polymodale. De manière préférée les catalyseurs mis en oeuvre dans la présente invention ont une distribution des pores monomodale. Le catalyseur mis en oeuvre dans l'invention présente peu de macropores, < 10% du VPT étant situé dans les pores de diamètre supérieur à 250 Å (et de préférence ≤ 7% du VPT), les pores de diamètre supérieur à 160 Å représentent 1-14% du VPT, et de préférence 1-7%, alors qu'au moins 60% du PVT (de préférence ≥ 65%, ou mieux ≥70%) correspond à des diamètres de pores de 100-160 Å, le reste correspondant à des pores < 100 Å (1 Å = $10^{-10}$ m).

Ainsi, dans ce catalyseur, la majorité des pores présente des diamètres de 100-160 Å.

Ledit catalyseur présente une activité en hydrocraquage des coupes de type gazole sous vide plus importante que les formules catalytiques connues dans l'art antérieur. Sans vouloir être lié par une quelconque théorie, il semble que cette activité particulièrement élevée des catalyseurs mis en oeuvre dans la présente invention est due d'une part aux renforcement de l'acidité du catalyseur par la présence d'une matrice alumine acidifiée par l'ajout de P, ce qui induit également une amélioration des propriétés hydrodéazotante de la phase active comprenant au moins un métal du groupe VIB et éventuellement au moins un métal du groupe VIII et d'autre part par la présence de la zéolithe Y très acide dont une bonne partie de l'acidité sera neutralisée par les composés azotés mais dont les sites acides restant dans les conditions opératoires donneront une activité en hydrocraquage suffisante au catalyseur.

Le catalyseur mis en oeuvre dans la présente invention peut être préparé par toutes les méthodes bien connues de l'homme du métier.

Avantageusement, il est obtenu par mélange d'une source d'alumine éventuellement dopée par le phosphore et d'une source de zéolithe Y de départ, ledit mélange étant ensuite mis en forme. Les éléments des groupes VIII et/ou VIB, du groupe VIIA et le phosphore sont introduits en totalité ou en partie lors du mélange, ou encore en totalité après mise en forme (préféré). La mise en forme est suivie d'une calcination à une température de 250 à 600°C. Une des méthodes préférées de mise en forme du catalyseur mis en oeuvre dans la présente invention consiste à malaxer la zéolithe Y de départ dans un gel humide d'alumine pendant quelques dizaines de minutes, puis à passer la pâte ainsi obtenue à travers une filière pour former des extrudés de diamètre compris de préférence entre 0,4 et 4 mm.

La source d'alumine est habituellement choisie dans le groupe formé par les gels d'alumine et les poudres d'alumines obtenues par calcination d'hydroxydes et d'oxyhydroxydes d'aluminium. On préfère utiliser des matrices contenant de l'alumine, sous toutes ces formes connues de l'Homme du métier, par exemple l'alumine gamma.

La source de zéolithe Y préférée est une poudre de zéolithe Y caractérisée par différentes spécifications : un paramètre cristallin supérieur à 2,451 nm; un rapport molaire $SiO_2/Al_2O_3$ global inférieur à 8, un rapport molaire $SiO_2/Al_2O_3$ de charpente calculé d'après la corrélation dite de Fichtner-Schmittler (dans Cryst. Res. Tech. 1984, 19, K1) inférieur à 11 ; une teneur en sodium inférieure à 0,2% poids déterminée sur la zéolithe calcinée à 1100°C ; une capacité $C_{Na}$ de reprise en ions sodium, exprimée en gramme de Na par 100 grammes de zéolithe modifiée, neutralisée puis calcinée, supérieure à environ 0,95; une surface spécifique déterminée par la méthode B.E.T. supérieure à environ 400 m$^2$/g et de préférence supérieure à 600 m$^2$/g; une capacité d'adsorption de vapeur d'eau à 25°C pour une pression partielle de 2,6 torrs (soit 34,6 MPa), supérieure à environ 6%, une répartition poreuse, déterminée par physisorption d'azote, comprenant entre 5 et 45% et de préférence entre 5 et 40% du volume poreux total de la zéolithe contenu dans des pores de diamètre compris entre 20 x 10$^{-10}$ m et 80 x 10$^{-10}$ m, et entre 5 et 45% et de préférence entre 5 et 40% du volume poreux total de la zéolithe contenu dans des pores de diamètre supérieur à 80 x 10$^{-10}$ m et généralement inférieur à 1000 x 10$^{-10}$ m, le reste du volume poreux étant contenu dans les pores de diamètre inférieur à 20 x 10$^{-10}$ m.

Le catalyseur renferme en outre une fonction hydrogénante. La fonction hydrogénante est assurée par au moins un métal ou composé de métal du groupe VI tels que le molybdène et le tungstène notamment. On peut utiliser une combinaison d'au moins un métal ou composé de métal du groupe VI (notamment le molybdène ou le tungstène) et d'au moins un métal ou composé de métal du groupe VIII de préférence non noble (notamment le cobalt ou le nickel) de la classification périodique des éléments.

La fonction hydrogénante telle qu'elle a été définie précédemment peut être introduite dans le catalyseur à divers niveaux de la préparation et de diverses manières. Elle peut être introduite en partie seulement (cas, par exemple, des associations d'oxydes de métaux des groupes VI et VIII) ou en totalité au moment du malaxage de la source d'alumine, le reste des élément(s) hydrogénant(s) étant alors introduit après malaxage, et plus généralement après calcination. De façon préférée, le métal du groupe VIII est introduit simultanément ou après le métal du groupe VI, quel que soit le mode introduction. Elle peut être introduite par une ou plusieurs opérations d'échange ionique sur le support calciné constitué de la zéolithe dispersée dans la matrice alumine, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VI (notamment le molybdène ou le tungstène) ont été préalablement introduits au moment du malaxage du support. Elle peut enfin être introduite par une ou plusieurs opérations d'imprégnation du support calciné constitué de la zéolithe et de la matrice alumine éventuellement dopée par P et/ou F, par des solutions contenant les précurseurs des oxydes de métaux des groupes VI et/ou VIII, les précurseurs des oxydes de métaux de groupe VIII étant de préférence introduits après ceux du groupe VI ou en même temps que ces derniers.

Dans le cas où les éléments sont introduits en plusieurs imprégnations des sels précurseurs correspondants, une étape de calcination intermédiaire du catalyseur devra être effectuée à une température comprise entre 250 et 600 °C.

Les sources d'élément du groupe VIB qui peuvent être utilisées sont bien connues de l'homme du métier. Par exemple, parmi les sources de molybdène et de tungstène on utilise de préférence les oxydes et les sels d'ammonium tels que le molybdate d'ammonium, l'heptamolybdate d'ammonium et le tungstate d'ammonium.

Les sources d'élément du groupe VIII qui peuvent être utilisées sont bien connues de l'homme du métier. Par exemple, on utilisera les nitrates, les sulfates, les halogénures.

L'ntroduction du phosphore dans le catalyseur peut être réalisée à divers niveaux de la préparation et de diverses manières. Une méthode préférée selon l'invention consiste à préparer une solution aqueuse d'au moins un élément du groupe VI et éventuellement d'au moins un élément du groupe VIII et d'un composé du phosphore et à procéder à une imprégnation dite à sec, dans laquelle on remplit le volume des pores du précurseur par la solution contenant le métal du groupe VI, éventuellement le métal du groupe VIII, le phosphore et éventuellement l'élément du groupe VIIA.

L'imprégnation du molybdène et/ou du tungstène peut être facilitée par ajout d'acide phosphorique dans les solutions, ce qui permet d'introduire aussi le phosphore de façon à promouvoir l'activité catalytique. D'autres composés du phosphore peuvent être utilisés comme il est bien connu de l'homme du métier.

Le phosphore et l'élément choisi parmi les ions halogénures du groupe VIIA, peuvent être introduits par une ou plusieurs opérations d'imprégnation avec excès de solution sur le précurseur calciné.

La source de phosphore préférée est l'acide orthophosphorique $H_3PO_4$, mais ses sels et esters comme les phosphates d'ammonium conviennent également. L'acide phosphomolybdique et ses sels, l'acide phosphotungstique et ses sels peuvent également être avantageusement employés. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

Les sources d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les catalyseurs ainsi obtenus sont utilisés pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids. Ces charges sont dépourvues de métaux, ou au plus elles n'en contiennent que des traces sans influence sur le catalyseur, les métaux éventuels ont été enlevés par hydrotraitement.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur.

Les catalyseurs mis en oeuvre dans la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Enfin, du fait de la composition du catalyseur, celui-ci est facilement régénérable.

Le catalyseur peut être utilisé dans des conditions variables d'hydrocraquage avec des pressions comprises entre 8 et 11 MPa, une température de réaction de 300 à 480°C un rapport H2/charge d'au moins 100 Nl H2/l de charge et une vitesse volumique horaire de 0,1-10h$^{-1}$, une conversion inférieure à 55%. (% pds de 380°C de l'effluent) Les charges hydrocarbonées traitées ont des points d'ébullition initiaux d'au moins 150°C, de préférence au moins 350°C, et plus avantageusement c'est une coupe bouillant entre 350-580°C.

Le catalyseur mis en oeuvre dans la présente invention peut être employé pour l'hydrocraquage de diverses coupes hydrocarbonées, par exemple de coupes de type distillats sous vide fortement chargée en soufre et azote. Dans ce mode d'hydrocraquage partiel le niveau de conversion est inférieur à 55%. Le catalyseur est alors employé à une température en général supérieure ou égale à 300°C, généralement d'au plus 480°C, et souvent comprise entre 350°C et 450°C. La pression est de 8-11MPa et avantageusement de 8,5-10 MPa. La quantité d'hydrogène est au mininum de 100 normaux litre d'hydrogène par litre de charge et souvent comprise entre 200 et 3000 normaux litre d'hydrogène par litre de charge. La vitesse volumique horaire est comprise en général entre 0,1 et 10h$^{-1}$. Dans ces conditions, les catalyseurs mis en oeuvre dans la présente invention présentent une meilleure activité en conversion, en hydrodésulfuration et en hydrodéazotation que les catalyseurs commerciaux.

Dans ce mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs étant utilisés dans la deuxième étape. Le catalyseur 1 de la première étape a une fonction d'hydrotraitement et comprend une matrice de préférence à base d'alumine, et de préférence ne contenant pas de zéolithe, et au moins un métal ayant une fonction hydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction d'hydrotraitement est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et VIII est comprise entre 5 et 40 % en poids et de préférence entre 7 et 30 % en poids et le rapport pondéral exprimé en oxyde métallique en métal (ou métaux) du groupe VI sur métal (ou métaux) du groupe VIII est compris entre 1,25 et 20 et de préférence entre 2 et 10. De plus, ce catalyseur peut contenir du phosphore. La teneur en phosphore, exprimée en concentration en pentaoxyde de diphosphore $P_2O_5$ sera d'au plus 15% généralement, de préférence comprise entre 0.1 et 15 % en poids et de préférence comprise entre 0,15 et 10% en poids. Il peut également contenir du bore dans un rapport B/P = 1,05 - 2 (atomique), la somme des teneurs en B et P exprimée en oxydes étant de 5-15 % poids.

La première étape se déroule généralement à une température de 350-460°C, de préférence 360-450°C, une pression totale 2 à 12MPa; et de préférence de 7,5-11 MPa, 7,5-10 MPa ou 8-11 MPa ou 8,5-10 MPa MPa, une vitesse volumique horaire de 0,1-5h$^{-1}$ et de préférence 0.2-2h$^{-1}$ et avec une quantité d'hydrogène d'au moins 100N1/N1 de charge, et de préférence 260-3000N1/N1 de charge.

Pour l'étape de conversion avec le catalyseur tel que décrit précédemment (ou seconde étape), les températures sont comprises entre 300°C et 480°C. La pression est en général de 8-11 MPa ou 8,5-10 MPa. La quantité d'hydrogène est au minimum de 100l/l de charge et souvent comprise entre 200 et 3000l/l d'hydrogène par litre de charge. La vitesse volumique horaire est comprise en général entre 0,15 et 10h$^{-1}$.

Dans ces conditions, les catalyseurs mis en oeuvre dans la présente invention présentent une meilleure activité en conversion, en hydrodésulfuration, en hydrodéazotation et une meilleure sélectivité en distillats moyens que les catalyseurs commerciaux. La durée de vie des catalyseurs est améliorée dans la plage de pression modérée.

**Exemple 1 : fabrication d'un catalyseur CP1 non conforme**

Le catalyseur CP1 est fabriqué de la façon suivante : on extrude de l'alumine de type SB3 fournie par la société Condéa à travers une filière de diamètre 1,4 mm. Les extrudés sont ensuite séchés une nuit à 120°C sous air puis calcinés à 550°C sous air. Les extrudés sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes sont les suivantes (par rapport au catalyseur) :

2,9 % en poids d'oxyde de nickel NiO
12,6 % en poids d'oxyde de molybdène $MoO_3$
4,9 % en poids d'oxyde de phosphore $P_2O_5$

**Exemple 2 : fabrication d'un catalyseur CP2 non conforme**

Le catalyseur CP2 est fabriqué de la façon suivante : on extrude une silice-alumine de type Siralox 30 fournie par la société Condéa à travers une filière de diamètre 1,4 mm.

Cette silice alumine contient environ 30% en poids de SiO2. Les extrudés sont ensuite séchés une nuit à 120°C sous air puis calcinés à 550°C sous air. Les extrudés sont imprégnés à sec par une solution d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes sont les suivantes (par rapport au catalyseur) :

2,7 % en poids d'oxyde de nickel NiO
12,4 % en poids d'oxyde de molybdène $MoO_3$
4,1 % en poids d'oxyde de phosphore $P_2O_5$

Ce type de catalyseur est représentatif des catalyseurs industriels d'hydrocraquage partiel de distillats sous vide.

**Exemple 3 : fabrication d'un catalyseur CP3 non conforme**

Le catalyseur CP3 est fabriqué de la façon suivante : on utilise 20 % poids d'une zéolithe Y de paramètre cristallin égal à 2.428 nm et de rapport SiO2/Al2O3 global de 15,2 et de rapport SiO2/Al2O3 de charpente de 60 que l'on mélange à 80 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air. Les extrudés sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes sont les suivantes (par rapport au catalyseur) :

3,0 % en poids d'oxyde de nickel NiO
13,0 % en poids d'oxyde de molybdène $MoO_3$
4,4 % en poids d'oxyde de phosphore $P_2O_5$

Le catalyseur final contient 16,3 % poids de zéolithe Y de paramètre de maille 2.428 nm de rapport SiO2/Al2O3 global de 15,2 et de rapport SiO2/Al2O3 de charpente de 60.

**Exemple 4 : fabrication d'un catalyseur CP4 conforme**

Le catalyseur CP4 est fabriqué de la façon suivante : on utilise 20 % poids d'une zéolithe Y de paramètre cristallin égal à 2,453 nm et rapport SiO2/Al2O3 global de 6,6 et de rapport SiO2/Al2O3 de charpente de 8,6, que l'on mélange à 80 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air. Les extrudés sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes actifs sont les suivantes (par rapport au catalyseur) :

2,6 % en poids d'oxyde de nickel NiO
12,0 % en poids d'oxyde de molybdène $MoO_3$
4,4 % en poids d'oxyde de phosphore $P_2O_5$

Le catalyseur final contient 16,5 % poids de zéolithe Y de paramètre de maille 2.444nm et rapport SiO2/Al2O3 global de 6,6 et de rapport SiO2/Al2O3 de charpente de 14,2.

**Exemple 5: fabrication d'un catalyseur CP5 conforme**

Le catalyseur CP5 est fabriqué de la façon suivante : on utilise 8 % poids d'une zéolithe Y de paramètre cristallin égal à 2,453 nm et rapport SiO2/Al2O3 global de 6,6 et de rapport SiO2/Al2O3 de charpente de 8,6, que l'on mélange à 92 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air. Les extrudés sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes actifs sont les suivantes (par rapport au catalyseur) :

2,8 % en poids d'oxyde de nickel NiO
14,5 % en poids d'oxyde de molybdène $MoO_3$
4,6 % en poids d'oxyde de phosphore $P_2O_5$

Le catalyseur final contient 6,1 % poids de zéolithe Y de paramètre de maille 2,443nm et rapport SiO2/Al2O3 global de 6,6 et de rapport SiO2/Al2O3 de charpente de 14,8.

**Exemple 6: comparaison des catalyseurs en hydrocraquage d'un gazole sous vide à basse pression.**

Les catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| point initial | 365°C |
| point 10 % | 430°C |
| point 50 % | 472°C |

(suite)

| | |
|---|---|
| point 90 % | 504°C |
| point final | 539°C |
| point d'écoulement | + 39°C |
| densité (20/4) | 0,921 |
| Soufre (% poids) | 2,46 |
| Azote (ppm poids) | 1130 |

L'unité de test catalytique comprend deux réacteurs en lit fixe, à circulation ascendante de la charge ("up-flow"). Dans chacun des réacteurs, on introduit 40 ml de catalyseur. Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit le catalyseur d'hydrocraquage (CP1, CP2, CP3 ou CP4). Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée. La pression totale est de 8,5 MPa, le débit d'hydrogène est de 500 litres d'hydrogène gazeux par litre de charge injectée, la vitesse volumique horaire est de 0,8 h$^{-1}$. Les deux réacteurs fonctionnement à la même température.

Les performances catalytiques sont exprimées par la conversion brute à 400°C (CB), par la sélectivité brute (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{moins} \text{ de l'effluent}$$

La sélectivité brute SB est prise égale à :

$$SB = 100 \times \text{poids de la fraction } (150°C\text{-}380°C)/\text{poids de la fraction } 380°C^{moins} \text{ de l'effluent}$$

La conversion en hydrodésulfuration HDS est prise égale à :

$$HDS = (S_{initial} - S_{effluent}) / S_{initial} \times 100 = (24600 - S_{effluent}) / 24600 \times 100$$

La conversion en hydrodéazotation HDN est prise égale à :

$$HDN = (N_{initial} - N_{effluent}) / N_{initial} \times 100 = (1130 - N_{effluent}) / 1130 \times 100$$

Dans le tableau suivant, nous avons reporté la conversion brute CB à 400°C, la sélectivité brute SB, la conversion en hydrodésulfuration HDS et la conversion en hydrodéazotation HDN pour les quatre catalyseurs.

| | CP1 NiMoP/ Alumine | CP2 NiMoP/ Silice-Alumine | CP3 NiMoP/ Alumine-Y(2,4 28 nm) | CP4 NiMoP/ Alumine-Y (2,453 nm) |
|---|---|---|---|---|
| CB (% poids) | 40,2 | 42,2 | 48,7 | 52,3 |
| SB | 82,5 | 82,6 | 80,3 | 78,9 |
| HDS (%) | 98,2 | 97,4 | 99,4 | 99,5 |
| HDN (%) | 92,4 | 85,4 | 96,6 | 98,3 |

L'utilisation des catalyseurs amorphes CP1 et CP2 montre que le catalyseur ayant une matrice silice-alumine donne un meilleur niveau de conversion de la fraction 380°C$^{plus}$ que le catalyseur CP1 à base d'alumine. Par contre le catalyseur CP1 ayant un support alumine présente l'avantage de donner de meilleures performances en hydrotraitement (hydrodésulfuration et hydrodéazotation).

L'utilisation d'un catalyseur à base de zéolithe Y (CP3 ou CP4) permet d'atteindre un niveau de conversion de la fraction 380°C[plus] plus élevé que celui obtenu avec les catalyseurs amorphes (CP1 et CP2). Selon le type de zéolithe Y employé et par rapport au catalyseur CP2, ce gain de conversion varie de 6,5 % poids (catalyseur CP3 ayant une zéolithe très désaluminée) à 10,1 % poids (catalyseur CP4 ayant une zéolithe non désaluminée). La sélectivité brute diminue légèrement quand la conversion augmente, mais reste à un niveau satisfaisant, même pour le catalyseur CP4 le plus actif. Par ailleurs, l'utilisation d'une matrice alumine associée à ces zéolithes permet d'obtenir des performances en hydrotraitement (hydrodésulfuration et hydrodéazotation) des catalyseurs nettement meilleures. Les catalyseurs CP3 et CP4, qui contiennent de la zéolithe et un support alumine, présentent des conversions en hydrodésulfuration et hydrodéazotation plus élevées que celles obtenues avec le catalyseur CP2, qui contient une matrice silice-alumine et ne contient pas de zéolithe et représente un catalyseur commercial. Globalement, l'utilisation d'une zéolithe non désaluminée permet d'obtenir un catalyseur CP4 nettement plus convertissant à isotempérature que le catalyseur amorphe CP1 avec une diminution modérée de la sélectivité et un catalyseur plus désulfurant et plus désazotant que le catalyseur CP2 contenant une phase acide amorphe et le catalyseur CP3 qui contient une zéolithe très désaluminée.

Les catalyseurs contenant une alumine acidifiée par le phosphore et une zéolithe non désaluminée globalement sont donc particulièrement intéressants pour l'hydrocraquage de charge de type distillats sous vide contenant de l'azote à une pression d'hydrogène modérée.

**Revendications**

1. Procédé d'hydrocraquage opérant à une pression de 8-11 MPa, à une température de 300-480°C, avec une conversion inférieure à 55% (% pds de 380°C de l'effluent), avec une quantité d'hydrogène d'au moins 100 N1 H2/1 de charge et une vitesse volumique horaire de 0,1-10 h$^{-1}$, et utilisant un catalyseur comprenant:

   - 1-99 % poids d'au moins une matrice alumine,
   - 0,1-80 % poids d'au moins une zéolithe Y, dépourvue de terres rares et d'akalino-terreux, de paramètre cristallin supérieur à 2,438 nm de rapport molaire $SiO_2/Al_2O_3$ global inférieur à 8, de rapport molaire $SiO_2/Al_2O_3$ de charpente inférieur à 21 et supérieur au rapport molaire $SiO_2/Al_2O_3$ global.
   - 0,1-30 % poids d'au moins un métal du groupe VIII et/ou 1-40 % poids d'au moins un métal du groupe VIB,
   - 0,1-20 % poids de phosphore,
   - 0-20 % poids d'au moins un élément du groupe VIIA,

   dans lequel les pores de diamètre > 25 nm occupent un volume inférieur à 10% du volume poreux total (VPT), les pores de diamètre supérieur à 16 nm; 1 à 14% du VPT, les pores de diamètre 10-16 nm au moins 60% du VPT, le reste correspondant à des pores de diamètre inférieur à 10 nm.

2. Procédé selon la revendication 1, dans lequel ledit catalyseur contient du fluor en tant qu'élément du groupe VIIA.

3. Procédé selon la revendication 1, dans lequel ledit catalyseur contient du molybdène et/ou du tungstène en tant qu'élément du groupe VIB.

4. Procédé selon la revendication 3, dans lequel ledit catalyseur contient du cobalt et/ou du nickel en tant qu'élément du groupe VIII.

5. Procédé selon l'une des revendications précédentes, dans lequel ledit catalyseur est obtenu par malaxage de la zéolithe Y avec un gel humide d'alumine, suivi d'une extrusion et d'une calcination à 250°-600°C.

6. Procédé selon l'une des revendication précédentes, dans lequel la charge est hydrotraitée préalablement à l'hydrocraquage.

7. Procédé selon la revendication 6 dans lequel le catalyseur d'hydrotraitement contient au moins un métal du groupe VIII, au moins un métal du groupe VIB et du phosphore et éventuellement du bore.

**Claims**

1. Process for hydrocracking, operating at a pressure of 8-11 MPa, and a temperature of 300-480°C with a conversion rate of less than 55 % (% by weight of 380°C less of the effluent), a quantity of hydrogen of at least 100 N1 H2/1 of feedstock and an hourly volume rate of 0.1-10 h$^{-1}$ with a catalyst comprising :

1-99% by weight of at least one alumina matrix,

0.1-80% by weight of at least one zeolite Y with a crystalline parameter that is greater than 2.438 nm, with an overall $SiO_2/Al_2O_3$ molar ratio that is less than 8 and a framework $SiO_2/Al_2O_3$ molar ratio that is less than 21 and greater than overall $SiO_2/Al_2O_3$ molar ratio,

0.1-30% by weight of at least one metal from group VIII and/or 1-40% by weight of at least one metal from group VIB,

0.1-20% by weight of phosphorus,

0-20% by weight of at least one element from group VIIA.

in which the pores with a diameter > 25 nm occupy a volume that is less than 10% of the total pore volume (VPT), the pores with a diameter greater than 16 nm occupy 1 to 14% of the VPT; and the pores with a diameter of 10-16 nm occupy at least 60% of the VPT, whereby the remainder corresponds to pores with a diameter that is less than 10 nm.

2. Catalyst according to claim 1, whose element from group VIIA is fluorine.

3. Process according to claim 1 whose element from group VIB is molybdenem and/or tungsten

4. Process according to claim 3 in which the catalyst contains cobalt and/or nickel as group VIII element.

5. Catalyst according to one of the preceding claims that is obtained by mixing zeolite Y with a moist alumina gel, followed by extrusion and calcination at 250-600°C.

6. Process according to one of the preceding claims in which the feedstock is hydrotreated prior to hydrocracking.

7. Process according to claim 6, in which the hydrotreatment catalyst contains at least one metal from group VIII, at least one metal from group VIB and phosphorus, and optionally boron.


**Patentansprüche**

1. Verfahren zum Hydrocracken, das bei einem Druck von 8 bis 11 MPa bei einer Temperatur zwischen 300 und 480°C, mit einer Umwandlung von 55 % (Gew.-% bei 380 °C des Abflusses), mit einer Wasserstoffbeschickungsmenge von mindestens 100 NI $H_2$/I und einer Volumengeschwindigkeit pro Stunde von 0,1 bis 10 h$^{-1}$ arbeitet und einen Katalysator verwendet, der folgendes umfasst:

- 1 bis 99 Gew.-% mindestens einer Aluminiumoxidmatrix,

- 0,1 bis 80 Gew.-% mindestens eines Y-Zeolithen, ohne Seltenerden und Erdmetalle, mit einem Kristallparameter von mehr als 2,438 nm mit einem Gesamtmolverhältnis $SiO_2/Al_2O_3$ kleiner als 8, mit einem Gerüstmol-verhältnis $SiO_2/Al_2O_3$ kleiner als 21 und größer als das Gesamtmolverhältnis $SiO_2/Al_2O_3$,

- 0,1 bis 30 Gew.-% mindestens eines Metalls der Gruppe VIII und/oder 1 bis 40 Gew.-% mindestens eines Metalls der Gruppe VIB,

- 0,1 bis 20 Gew.-% Phosphor,

- 0 bis 20 Gew.-% mindestens eines Elements der Gruppe VIIA,

wobei Poren mit einem Durchmesser >25 nm ein Volumen kleiner als 10 % des Gesamtporenvolumens (GPV), Poren mit einem Durchmesser größer als 16 nm 1 bis 14 % des GPV, Poren mit einem Durchmesser von 10 bis 16 nm mindestens 60 % des GPV einnehmen, wobei der Rest Poren mit einem Durchmesser kleiner als 10 nm entspricht.

2. Verfahren nach Anspruch 1, wobei der Katalysator Fluor als Element der Gruppe VIIA enthält.

3. Verfahren nach Anspruch 1, wobei der Katalysator Molybdän und/oder Wolfram als Element der Gruppe VIB enthält.

4. Verfahren nach Anspruch 3, wobei der Katalysator Cobalt und/oder Nickel als Element der Gruppe VIII enthält.

5. Verfahren nach einem der vorhergehenden Ansprüche, wobei der Katalysator durch Verkneten des Y-Zeolithen mit einem feuchten Aluminiumdioxidgel, gefolgt von Extrusion und Kalzinierung bei 250 bis 600 °C erhalten wird.

6. Verfahren nach einem der vorhergehenden Ansprüche, wobei die Beschickung vor dem Hydrokracken hydrobehandelt wird.

7. Verfahren nach Anspruch 6, wobei der Hydrobehandlungskatalysator mindestens ein Metall der Gruppe VIII, mindestens ein Metall der Gruppe VIB und Phosphor und gegebenenfalls Bor enthält.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 121931 A
- US 4326947 A
- US 5342507 A

**Littérature non-brevet citée dans la description**

- Handbook of Chemistry and Physics. 1995
- Zeolite Molecular Sieves Structure. Chemistry and Uses. D.W. BRECK, J. WILLEY and Sons, 1973
- **BRUNAUER ; EMMETT ; TELLER.** *J. Am. Chem. Soc.,* 1938, vol. 60, 309-316
- *Cryst. Res. Tech.,* 1984, vol. 19, K1